# EUROPEAN PATENT APPLICATION

(11) **EP 1 790 456 A2**
(43) Date of publication of application: **30.05.2007**
(21) Application number: 06009354.9
(22) Date of filing: 05.05.2006
(51) Int. Cl.: B29C 45/28

(54) **Method and apparatus for controlling resin amount in cylinders of injection molding machines**

(30) Priority: 28.11.2005 KR 20050114097
(71) Applicant: Yudo Co. Ltd., Hwasung-Si Gyeonggi-Do 445-911 (KR)
(72) Inventor: Yu, Young-Hee, Yangcheon-Gu 158-762 (KR)
(74) Representative: Banzer, Hans-Jörg

(57) **Abstract**

A method and apparatus for controlling the amount of resin in cylinders of injection molding machines is disclosed. In the control method, a control shaft (6) is rotated, so that a worm gear (5) of the control shaft is rotated to rotate a stroke control gear (3), thus rotating a rotative shaft (4), which is coupled to the center of the stroke control gear, and moving a stroke plate (8) upwards or downwards in response to the rotating motion of the rotative shaft. A cylinder is actuated such that a piston (10), coupled to a valve pin (11), is moved upwards and downwards relative to the stroke plate (8). The control apparatus includes a cylinder cap (2) mounted to the center of a cylinder cover (12) assembled with a cylinder housing (1). The rotative shaft (4) is mounted to the center of the cylinder cap (2) and engages with the stroke control gear (3), with an externally threaded part (9) formed at the lower part of the rotative shaft (4). A motor-operated or hand-operated control shaft (6) having a worm gear (5) is placed at an end of the stroke control gear (3). The stroke plate (8) having an internally threaded part (7) is installed in the stroke control gear (3) such that the internally and externally threaded parts (7, 9) engage with each other, thus controlling the height of the stroke plate (8) and controlling the stroke of the piston (10).

## Description

### BACKGROUND OF THE INVENTION

### Field of the Invention

The present invention relates, in general, to cylinders of injection molding machines and, more particularly, to a method and apparatus for controlling the amount of resin discharged from cylinders of injection molding machines, which can mechanically control the gap of a valve pin using both a worm gear mounted to a motor-operated or hand-operated rotative shaft and a stroke plate mounted to the upper end of a piston, thus precisely controlling the amount of discharged resin using a mechanical structure without using any additional timer.

### Description of the Related Art

Generally, a conventional cylinder for injection molding machines has been typically provided with a timer to control the operating time of the cylinder so as to control the amount of resin discharged from the cylinder. Thus, the conventional cylinder for injection molding machines cannot be controlled if there is no timer in the cylinder or if the timer malfunctions. Furthermore, the timer provided in the cylinders of injection molding machines cannot precisely control the amount of resin, so that it is almost impossible to finely control the amount of resin discharged from the conventional cylinders having the timers.

As described above, the use of timers in the conventional cylinders of injection molding machines undesirably results in a time difference, thus often failing to precisely control the amount of resin. The timers also increase the production cost of the injection molding machines.

Furthermore, a conventional method of controlling the amount of resin in the cylinders of the injection molding machines having timers must include a skilled technique for executing maintenance of the timers. Thus, plastic product manufacturers using conventional injection molding machines having timers must employ workers specifically qualified to operate the timers, thereby being burdened with excessive personnel expenses.

In addition, the conventional method of controlling the amount of resin in the cylinders of the injection molding machines having timers cannot precisely control the amount of resin due to a time difference. Thus, in the related art, it is almost impossible to finely control the amount of resin discharged from the conventional cylinders having the timers.

### SUMMARY OF THE INVENTION

Accordingly, the present invention has been made keeping in mind the above problems occurring in the related art, and an object of the present invention is to provide a method and apparatus for controlling the amount of resin discharged from cylinders of injection molding machines, in which a rotative shaft is mounted to the center of a cylinder cap and is locked to a stroke control gear, a motor-operated or hand-operated control shaft having a worm gear engages with one end of the stroke control gear, and a stroke plate having an internally threaded part is provided at the lower end of the stroke control gear, so that the rotative shaft can control the height of the stroke plate and the stroke of the piston, thereby controlling the gap of a valve pin and precisely controlling the amount of discharged resin.

In order to achieve the above object, according to one aspect of the present invention, there is provided a method of controlling the amount of resin discharged from cylinders of injection molding machines, comprising the steps of: rotating a control shaft, so that a worm gear provided on the control shaft is rotated to rotate a stroke control gear, thus rotating a rotative shaft, which is coupled to the center of the stroke control gear, and moving a stroke plate upwards or downwards in response to a rotating motion of the rotative shaft; and actuating a cylinder such that a piston, coupled to a valve pin at a lower end thereof, is moved upwards and downwards relative to the stroke plate.

According to another aspect, the present invention provides an apparatus for controlling the amount of resin discharged from a cylinder of an injection molding machine by actuating the cylinder, comprising: a cylinder cap mounted to the center of a cylinder cover assembled with a cylinder housing; a rotative shaft mounted to the center of the cylinder cap and engaging with a stroke control gear, with an externally threaded part formed at the lower part of the rotative shaft; a control shaft having a worm gear and placed such that the control shaft engages with an end of the stroke control gear, the control shaft being configured as a motor-operated or hand-operated shaft; a stroke plate having an internally threaded part and installed in the lower part of the stroke control gear such that the internally threaded part of the stroke plate engages with the externally threaded part of the rotative shaft, thus controlling the height of the stroke plate and controlling the stroke of the piston.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a flowchart of a resin amount control method according to the present invention;
FIG. 2 is a side sectional view illustrating the construction of a cylinder of an injection molding machine having a resin amount control apparatus according to the present invention;
FIG. 3 is a perspective view schematically illustrating an important operating part of the resin amount control apparatus according to the present invention; and
FIG. 4 is a side sectional view illustrating the resin amount control apparatus according to the present invention when the apparatus has been actuated.

### DETAILED DESCRIPTION OF THE INVENTION

Reference will now be made in greater detail to a preferred embodiment of the invention, an example of which is illustrated in the accompanying drawings.

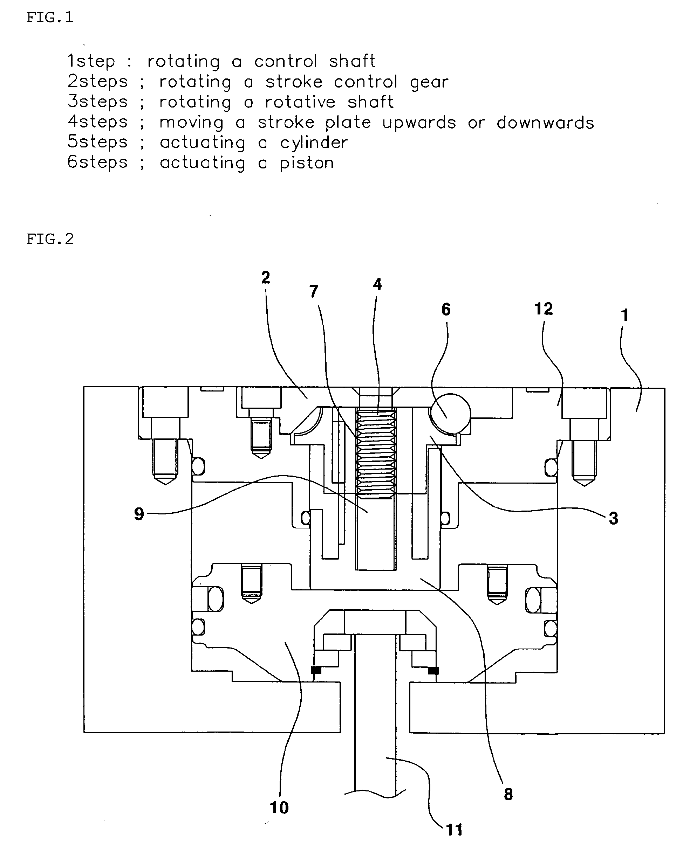

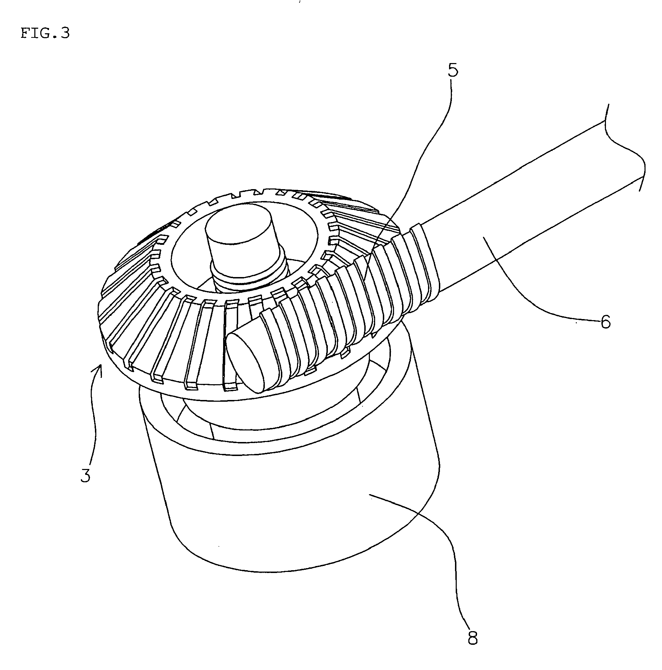

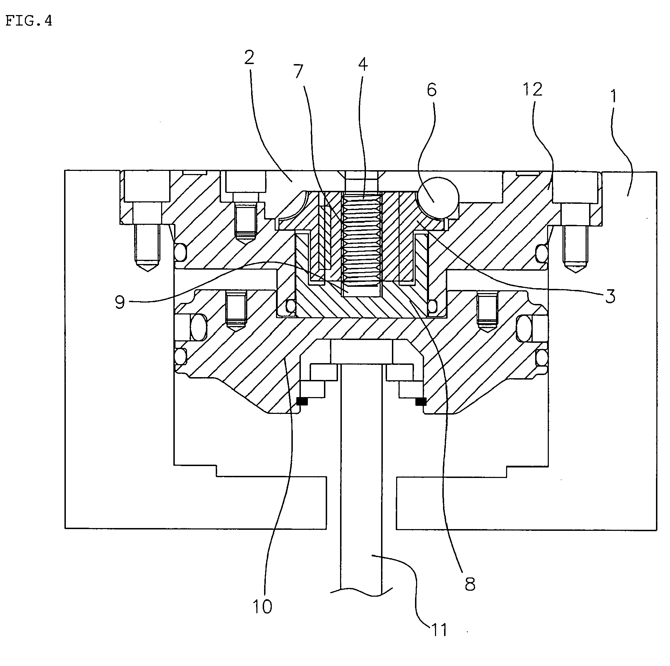

FIG. 1 is a flowchart of a resin amount control method according to the present invention. FIG. 2 is a side sectional view illustrating the construction of a cylinder of an injection molding machine having a resin amount control apparatus according to the present invention. FIG. 3 is a perspective view schematically illustrating an important operating part of the resin amount control apparatus according to the present invention. FIG. 4 is a side sectional view illustrating the resin amount control apparatus according to the present invention when the apparatus has been actuated.

As shown in FIGS. 2, 3 and 4, the apparatus for controlling the amount of resin discharged from a cylinder of an injection molding machine by actuating the cylinder comprises a cylinder cap 2, which is mounted to the center of a cylinder cover 12 assembled with a cylinder housing 1. A rotative shaft 4 is mounted to the center of the cylinder cap 2 such that the shaft 4 engages with a stroke control gear 3. An externally threaded part 9 is formed at the lower part of the rotative shaft 4. A control shaft 6 having a worm gear 5 is placed such that the control shaft 6 engages with an end of the stroke control gear 3. The control shaft 6 is configured as a motor-operated or hand-operated shaft. A stroke plate 8 having an internally threaded part 7 is installed in the lower part of the stroke control gear 3 such that the internally threaded part 7 of the stroke plate 8 engages with the externally threaded part 9 of the rotative shaft 4, thus controlling the height of the stroke plate 8 and controlling the stroke of the piston 10. Therefore, the resin amount control apparatus according to the present invention can control the gap of a valve pin 11 and can precisely control the amount of resin discharged from the cylinder of the injection molding machine.

To control the amount of resin discharged from the cylinder of the injection molding machine, the resin amount control apparatus will be operated as follows.

As shown in the flowchart of FIG. 1, to control the amount of resin discharged from a cylinder of an injection molding machine, a desired stroke of the piston 10, which is coupled to the valve pin 11, is preset and, thereafter, the control shaft 6 having the worm gear 5 is appropriately rotated to achieve the desired stroke of the piston 10.

When the control shaft 6 is rotated as described above, the stroke control gear 3, which engages with the worm gear 5 of the control shaft 6, is rotated by the rotating motion of the control shaft 3.

In the above state, the rotative shaft 4, which is mounted to the center of the stroke control gear 3, is rotated along with the stroke control gear 3.

In other words, the rotative shaft 4, which has the externally threaded part 9 and is rotatably coupled to the cylinder cap 2, is rotated by the rotating motion of the stroke control gear 3.

When the rotative shaft 4 having the externally threaded part 9 is rotated as described above, the stroke plate 8, which engages with the externally threaded part 9 of the rotative shaft 4 at the internally threaded part 7 thereof, is moved upwards or downwards.

Described in detail, when the rotative shaft 4, which engages with the stroke control gear 3 in a state in which the stroke plate 8 is mounted to the cylinder cover 12, is rotated, the stroke plate 8 moves upwards or downwards along the locking hole of the cylinder cover 12, which functions as a guide rail.

Described in detail, the externally threaded part 9 of the rotative shaft 4 engages with the internally threaded part 7 formed in the center of the stroke plate 8. Thus, when the rotative shaft 4 having the externally threaded part 9 is rotated in one direction, the stroke plate 8 is moved upwards or downwards in the locking hole of the cylinder cover 12, which functions as a guide rail.

As described above, the present invention can adjust a stroke by moving the stroke plate 8 upwards or downwards, so that the piston 10 coupled to the valve pin 11 can be moved upwards and downwards within the adjusted stroke.

Because the present invention can precisely actuate the stroke plate 8 by rotating the control shaft 6 having the worm gear 5, the stroke of the piston 10 can be precisely controlled. Thus, the amount of discharged resin in the cylinder of an injection molding machine can be precisely controlled.

As apparent from the above description, the resin amount control method and apparatus according to the present invention provides advantages in that a rotative shaft engaging with a stroke control gear is coupled to the center of a cylinder cap, a motor-operated or hand-operated control shaft having a worm gear engages with an end of the stroke control gear, and a stroke plate having an internally threaded part is placed at the lower end of the stroke control gear, so that the rotative shaft can control the height of the stroke plate so as to control the stroke of the piston and control the gap of the valve pin, thereby precisely controlling the amount of resin discharged from the cylinder of an injection molding machine. The apparatus of the present invention has a simple construction, thus being easily manufactured, and controls the amount of discharged resin using a mechanical structure, thus reducing the production cost of the injection molding machine and precisely controlling the amount of resin discharged from the cylinder of the injection molding machine. Furthermore, the present invention can easily and efficiently control the stroke, in which the piston moves upwards and downwards, outside a mold, so that the work of controlling the amount of resin can be easily executed. The present invention thus maximizes work efficiency while controlling the amount of resin discharged from the cylinder of the injection molding machine.

Although a preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. A method of controlling an amount of resin discharged from cylinders of injection molding machines, comprising the steps of:
rotating a control shaft (6), so that a worm gear (5) provided on the control shaft (6) is rotated to rotate a stroke control gear (3), thus rotating a rotative shaft (4), which is coupled to a center of the stroke control gear (3), and moving a stroke plate (8) upwards or downwards in response to a rotating motion of the rotative shaft (4); and
actuating a cylinder such that a piston (10), coupled to a valve pin (11) at a lower end thereof, is moved upwards and downwards relative to the stroke plate (8).

2. An apparatus for controlling an amount of resin discharged from a cylinder of an injection molding machine by actuating the cylinder, comprising:
a cylinder cap (2) mounted to a center of a cylinder cover (12) assembled with a cylinder housing (1);
a rotative shaft (4) mounted to a center of the cylinder cap (2) and engaging with a stroke control gear (3), with an externally threaded part (9) formed at a lower part of the rotative shaft (4);
a control shaft (6) having a worm gear (5) and placed such that the control shaft (6) engages with an end of the stroke control gear (3), the control shaft (6) being configured as a motor-operated or hand-operated shaft;
a stroke plate (8) having an internally threaded part (7) and installed in a lower part of the stroke control gear (3) such that the internally threaded part (7) of the stroke plate (8) engages with the externally threaded part (9) of the rotative shaft (4), thus controlling a height of the stroke plate (8) and controlling a stroke of the piston (10).

3. The apparatus for controlling the amount of resin discharged from the cylinder of the injection molding machine according to claim 2, wherein the height of the stroke plate (8) is controlled using a mechanical structure, thus mechanically controlling the stroke of the piston (10).
